(19) 

Europäisches Patentamt
European Patent Office
Office européen des brevets

(11) **EP 3 981 503 A1**

(12) **EUROPEAN PATENT APPLICATION**
published in accordance with Art. 153(4) EPC

(43) Date of publication:
**13.04.2022 Bulletin 2022/15**

(21) Application number: **20819559.4**

(22) Date of filing: **01.06.2020**

(51) International Patent Classification (IPC):
*B01D 63/02* (2006.01)       *B01D 69/00* (2006.01)
*B01D 69/02* (2006.01)       *B01D 69/08* (2006.01)
*B01D 71/44* (2006.01)       *B01D 71/48* (2006.01)
*B01D 71/64* (2006.01)       *C08L 39/06* (2006.01)
*C08L 67/03* (2006.01)       *D01F 6/62* (2006.01)
*C08L 79/08* (2006.01)       *B01D 53/22* (2006.01)
*B01D 53/26* (2006.01)

(52) Cooperative Patent Classification (CPC):
**B01D 53/22; B01D 53/26; B01D 63/02;**
**B01D 69/00; B01D 69/02; B01D 69/08;**
**B01D 71/44; B01D 71/48; B01D 71/64;**
**C08L 39/06; C08L 67/03; C08L 79/08; D01F 6/62**

(86) International application number:
**PCT/JP2020/021537**

(87) International publication number:
**WO 2020/246414 (10.12.2020 Gazette 2020/50)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **06.06.2019 JP 2019106549**

(71) Applicant: **Unitika Ltd.**
**Osaka-shi**
**Osaka 541-8566 (JP)**

(72) Inventors:
• **TANAKA, Jun**
**Uji-shi, Kyoto 611-0021 (JP)**
• **INOUE, Kuniko**
**Uji-shi, Kyoto 611-0021 (JP)**
• **ONO, Takahiro**
**Uji-shi, Kyoto 611-0021 (JP)**

(74) Representative: **Müller-Boré & Partner**
**Patentanwälte PartG mbB**
**Friedenheimer Brücke 21**
**80639 München (DE)**

(54) **HOLLOW FIBER MEMBRANE, MODULE OF SAID HOLLOW FIBER MEMBRANE, HUMIDIFICATION UNIT, AIR DRYER, MEMBRANE FORMING-RAW MATERIAL SOLUTION OF SAID HOLLOW FIBER MEMBRANE, AND METHOD FOR PRODUCING SAID HOLLOW FIBER MEMBRANE**

(57) Provided is a hollow fiber membrane that is excellent in water vapor separation performance immediately after production and water vapor separation performance after repeated use with compressed air. A hollow fiber membrane comprising a polyarylate resin, wherein the hollow fiber membrane includes a skin layer on at least one of inner and outer surfaces, has a tensile strength of 7 MPa or more and an elongation at break of 15% or more, and has an internal pressure water permeability of less than 100 L/(m²·atm/h) as measured using pure water at 25°C.

Fig. 1

EP 3 981 503 A1

## Description

Technical Field

The present invention relates to a hollow fiber membrane, and particularly to a hollow fiber membrane suitable for use as an air dryer for compressed air and the like.

Background Art

Porous membranes have been conventionally used for separating various solids, liquids, and gases. For example, porous membranes are used for separating microparticles in a liquid or separating water in an alcohol.

For example, dehumidifiers such as refrigerator-type and adsorption-type dehumidifiers are often used for the dehumidification of air used for purposes such as air conditioning in factory rooms for industrial production. However, refrigerator-type dehumidifiers are large and consume much electric power. Adsorption-type dehumidifiers have the drawback that the replacement of the adsorbent is frequently required. Moreover, recently, the use of membrane-type dehumidifiers, which are easy to maintain and cost advantageous, has been attracting attention. In polymer electrolyte fuel cells, which are considered to be promising for electric power generation in the future, it is important that the electrolyte membrane be appropriately humidified in order to maintain a high output of generated electric power, and the use of a membrane-type humidifying membrane as a lightweight and small humidifier has been attracting attention.

As a membrane for humification, there is known a hollow fiber membrane for humidification, wherein the material of the membrane for humidification contains a polysulfone, and the membrane for humidification has a pore size distribution such that a sieve coefficient with respect to dextran with a weight average molecular weight of 30000 is 0.1 or less, and a sieve coefficient with respect to dextran with a weight average molecular weight of 1200 is 0.3 or more, and has water permeation performance of $1.1 \times 10^{-11}$ m$^3$/m$^2$/s/Pa or more and $4.3 \times 10^{-10}$ m$^3$/m$^2$/s/Pa or less (see, for example, Patent Literature 1). It is described that the hollow fiber membrane has both gas barrier properties and water vapor permeability, and has excellent durability and heat resistance, and thus, can be effectively used as a membrane for humidification.

There is also known a method for producing a water vapor permeable membrane comprising dry-wet spinning a spinning dope comprising a water-soluble organic solvent solution composed of a polyphenylsulfone resin and a hydrophilic polyvinylpyrrolidone, using water as a core liquid (see, for example, Patent Literature 2). It is described that the porous polyphenylsulfone resin or polysulfone resin hollow fiber membrane obtained using this method is not only excellent in membrane strength and durability, but is also excellent particularly as a water vapor permeable membrane, and thus, can be effectively used as a humidifying membrane for fuel cells and the like.

There is also known a method for producing a hollow fiber membrane suitable for use as a separation membrane, a dehumidifying membrane, and the like, wherein dry-wet spinning or wet spinning is performed using a dope solution containing a non-water-soluble membrane-forming polymer which is a polyamide-imide, a polyetherimide, or a meta-type aromatic polyamide, a good solvent thereof, and an inorganic salt or a water-soluble polymer (see, for example, Patent Literature 3).

Regarding dehumidifying membranes, there is known a polyetherimide dehumidifying membrane made of a hollow fiber membrane formed from a polyetherimide (see, for example, Patent Literature 4).

Citation List

Patent Literature

Patent Literature 1: JP 2007-289944 A
Patent Literature 2: JP 2004-290751 A
Patent Literature 3: JP H10-52631 A
Patent Literature 4: JP H11-76778 A

Summary of Invention

Technical Problem

However, the hollow fiber membranes made of a polysulfone or a polyetherimide disclosed in Patent Literatures 1 to 4 have the drawback that the membranes may break or cannot maintain the water vapor separation performance after repeated use, when compressed air is used as humidifying or dehumidifying air. Moreover, research by the present inventors has revealed that when a thick skin layer is formed in the hollow fiber membranes disclosed in Patent Literatures 1 to 4 in order to improve the durability against repeated use with compressed air, it is difficult for the hollow fiber membranes to have water vapor separation performance from immediately after production.

Accordingly, it is a main object of the present invention to solve the above-described problem, and provide a hollow fiber membrane that is excellent in water vapor separation performance both immediately after production (initial) and after repeated use with compressed air.

Technical Solution

As a result of research to solve the above-described problem, the present inventors have found that it is important to increase the strength and elongation at break of a hollow fiber membrane, in order to increase the durability against repeated use with compressed air. On the other hand, the present inventors have found that while the strength and elongation at break of the hollow fiber membranes made of a polysulfone or a polyetherimide disclosed in Patent Literatures 1 to 4 can be increased to some extent by increasing the concentration of the polysulfone or polyetherimide, the hollow fiber membranes in this case cannot have initial water vapor separation performance.

The present inventors have further conducted extensive research, and consequently found that when a polyarylate is used as a polymer to form a hollow fiber membrane, and a skin layer of the hollow fiber membrane is developed to increase the tensile strength and elongation at break of the hollow fiber membrane, the hollow fiber membrane thus obtained is excellent in both water vapor separation performance immediately after production and water vapor separation performance after repeated use with compressed air. The present inventors have also found that this excellent hollow fiber membrane can be satisfactorily produced by setting the concentration of the dope solution for forming the hollow fiber membrane in a predetermined range. The present invention has been completed by conducting further research based on these findings.

In summary, the present invention provides the embodiments of the invention as set forth below:

Item 1. A hollow fiber membrane comprising a polyarylate resin,

wherein the hollow fiber membrane includes a skin layer on at least one of inner and outer surfaces,
has a tensile strength of 7 MPa or more and an elongation at break of 15% or more, and
has an internal pressure water permeability of less than 100 L/($m^2$·atm/h) as measured using pure water at 25°C.

Item 2. The hollow fiber membrane according to item 1, further comprising a polyetherimide and/or a polyvinylpyrrolidone.

Item 3. The hollow fiber membrane according to item 1 or 2, wherein the skin layer has a thickness of 100 to 2000 nm.

Item 4. The hollow fiber membrane according to any one of items 1 to 3, wherein, in a hollow fiber membrane module fabricated so that the hollow fiber membrane has an effective inner surface area of $6.8 \times 10^2$ $cm^2$, when air with a dew point of -4°C at 25°C is supplied into the hollow fiber membrane at a pressure of 0.5 MPa and a flow rate of 4.0 L/min, a decrease in the dew point is 3 to 10°C.

Item 5. The hollow fiber membrane according to any one of items 1 to 4, which is used for separating water vapor in air.

Item 6. The hollow fiber membrane according to item 5, wherein the air is compressed air.

Item 7. A hollow fiber membrane module for separation of water vapor, comprising the hollow fiber membrane according to any one of items 1 to 6 housed in a case.

Item 8. A humidifying unit comprising the hollow fiber membrane module according to item 7.

Item 9. An air dryer comprising the hollow fiber membrane module according to item 7.

Item 10. A dope solution for a hollow fiber membrane, in which the concentration of a polymer including a polyarylate is 19 to 28% by mass, wherein the dope solution is used for forming a hollow fiber membrane.

Item 11. A method for producing the hollow fiber membrane according to any one of items 1 to 6, comprising using the dope solution according to item 10.

Advantageous Effects of Invention

The hollow fiber membrane of the present invention is a hollow fiber membrane comprising a polyarylate resin, wherein the hollow fiber membrane includes a skin layer on at least one of inner and outer surfaces, has a tensile strength of 7 MPa or more and an elongation at break of 15% or more, and has an internal pressure water permeability of less than 100 L/($m^2$·atm/h) as measured using pure water at 25°C, and thus, is excellent in water vapor separation performance immediately after production and water vapor separation performance after repeated use with compressed air.

Brief Description of Drawings

FIG. 1 is a schematic diagram of an apparatus that represents one embodiment of the method for producing the hollow fiber membrane of the present invention.
FIG. 2 is a schematic cross-sectional view of a spinneret for producing the hollow fiber membrane of the present invention.
FIG. 3 is a schematic diagram of an apparatus for measuring the internal pressure water permeability of the hollow fiber membrane.
FIG. 4 is a schematic diagram of a hollow fiber membrane module.
FIG. 5 is a schematic diagram for use in explaining the length measurement point of a test length in the measurement of tensile strength.

Description of Embodiments

The hollow fiber membrane of the present invention is a hollow fiber membrane comprising a polyarylate resin, wherein the hollow fiber membrane includes a skin layer on at least one of inner and outer surfaces, has a tensile strength of 7 MPa or more and an elongation at break of 15% or more, and has an internal pressure water permeability of less than 100 L/(m$^2$·atm/h) as measured using pure water at 25°C. The hollow fiber membrane of the present invention will be hereinafter described in detail.

The polyarylate resin contained in the hollow fiber membrane of the present invention is a resin containing a dihydric phenol component and an aromatic dicarboxylic acid component as structural units. That is, the polyarylate resin contained in the hollow fiber membrane of the present invention is a polycondensate of the dihydric phenol component and the aromatic dicarboxylic acid component.

The dihydric phenol component may be any organic compound that contains two phenolic hydroxyl groups per molecule. "Phenolic hydroxyl group" refers to a hydroxyl group directly attached to an aromatic ring. Examples of the dihydric phenol component include 2,2-bis(4-hydroxyphenyl)propane, bis(4-hydroxyphenyl)methane, 1,1-bis(4-hydroxyphenyl)ethane, 2,2-bis(4-hydroxyphenyl)butane, 2,2-bis(4-hydroxyphenyl)-4-methylpentane, 2,2-bis(4-hydroxy-3,5-dimethylphenyl)propane, bis(4-hydroxy-3,5-dimethylphenyl)methane, 2,2-bis(4-hydroxy-3-methylphenyl)propane, 2,2-bis(4-hydroxy-3-isopropylphenyl)propane, 1,3-bis(2-(4-hydroxyphenyl)-2-propyl)benzene, 1,4-bis(2-(4-hydroxyphenyl)-2-propyl)benzene, bis(4-hydroxyphenyl)sulfone, bis(4-hydroxyphenyl)sulfide, bis(4-hydroxyphenyl)ether, 1,3-bis(2-(4-hydroxyphenyl)-2-propyl)benzene, 1,4-bis(2-(4-hydroxyphenyl)-2-propyl)benzene 4,4'-dihydroxybiphenyl, 4,4'-dihydroxy-3,3',5,5'-tetramethylbiphenyl, 1,1-bis(4-hydroxyphenyl)-1-phenylethane, 1,1-bis(4-hyclroxyphenyl)-1-phenylpropane, 1,1-bis(4-hydroxyphenyl)-1-phenylbutane, 1,1-bis(4-hydroxy-3-methylphenyl)-1-phenylethane, 1,1-bis(4-hydroxy-3,5-dimethylphenyl)-1-phenylethane, 1,1-bis(4-bydroxyphenyl)-(4-t-butylphenyl)methane, 1,1-bis(4-hydroxy-3-phenylphenyl)-1-phenylethane, bis(4-hydroxyphenyl)diphenylmethane, 3,3-bis(4-hydroxyphenyl)phthalimidine, N-phenyl-3,3-bis(4-hydroxyphenyl)phthalimidine, N-methyl-3,3-bis(4-hydroxyphenyl)phthalimidine, N-ethyl-3,3-bis(4-hydroxyphenyl)phthalimidine, 1,1-bis(4-hydroxyphenyl)cyclohexane, 1,1-bis(3,5-dimethyl-4-hydroxyphenyl)cyclohexane, 1,1-bis(3-methyl-4-hydroxyphenyl)cyclohexane, 1,1-bis(4-hydroxyphenyl)-3,3,5-trimethylcyclohexane, 1,1-bis-(3,5-dimethyl-4-hydroxyphenyl)-3,3,5-trimethyl-cyclohexane, 1,1-bis-(3-methyl-4-hydroxyphenyl)-3,3,5-trimethyl-cyclohexane, and 1,1-bis(4-bydroxyphenyl)-cyclododecane. These compounds may be used alone or in combination.

From the viewpoint of facilitating providing the hollow fiber membrane of the present invention with higher elongation at break to achieve superior water vapor separation performance after repeated use with compressed air, the dihydric phenol component preferably includes one or more dihydric phenol components selected from the group (hereinafter sometimes referred to as "group A") consisting of 2,2-bis(4-hydroxyphenyl)propane, bis(4-hydroxyphenyl)methane, 1,1-bis(4-hydroxyphenyl)ethane, 2,2-bis(4-hydroxyphenyl)butane, 2,2-bis(4-hydroxyphenyl)-4-methylpentane, 2,2-bis(4-hydroxy-3,5-dimethylphenyl)propane, bis(4-hydroxy-3,5-dimethylphenyl)methane, 2,2-bis(4-hydroxy-3-methylphenyl)propane, 2,2-bis(4-hydroxy-3-isopropylphenyl)propane, 1,3-bis(2-(4-hydroxyphenyl)-2-propyl)benzene, 1,4-bis(2-(4-hydroxyphenyl)-2-propyl)benzene, bis(4-hydroxyphenyl)sulfone, bis(4-hydroxyphenyl)sulfide, bis(4-hydroxyphenyl)ether, 1,3-bis(2-(4-hydroxyphenyl)-2-propyl)benzene, 1,4-bis(2-(4-hydroxyphenyl)-2-propyl)benzene 4,4'-dihydroxybiphenyl, and 4,4'-dihydroxy-3,3',5,5'-tetramethylbiphenyl. In the group A, 2,2-bis(4-hydroxyphenyl)propane is particularly preferred.

As described below, in the method for producing the hollow fiber membrane of the present invention, from the viewpoint of facilitating allowing the skin layer of the hollow fiber membrane of the present invention to satisfactorily develop to achieve superior water vapor separation performance immediately after production and superior water vapor separation performance after repeated use with compressed air, the concentration of a polymer including the polyarylate resin in the dope solution is preferably 19 to 28% by mass. Moreover, when the polymer concentration is set in this range, and particularly when the polymer concentration is set in this range and simultaneously the polyarylate resin content in the hollow fiber membrane of the present invention exceeds 50% by mass, from the viewpoint of facilitating further increasing the solubility of the polyarylate resin in the dope solution to further increase the spinning properties and membrane-formability during the formation of the hollow fiber membrane, the dihydric phenol component preferably includes one or more dihydric phenol components selected from the group (hereinafter sometimes referred to as "group B") consisting of 1,1-bis(4-hydroxyphenyl)-1-phenylethane, 1,1-bis(4-hydroxyphenyl)-1-phenylpropane, 1,1-bis(4-hydroxyphenyl)-1-phenylbutane, 1,1-bis(4-hydroxy-3-methylphenyl)-1-phenylethane, 1,1-bis(4-hydroxy-3,5-dimethylphenyl)-1-phenylethane, 1,1-bis(4-hydroxyphenyl)-(4-t-butylphenyl)methane, 1,1-bis(4-hydroxy-3-phenylphenyl)-1-phenylethane, bis(4-hydroxyphenyl)diphenylmethane, 3,3-bis(4-hydroxyphenyl)phthalimidine, N-phenyl-3,3-bis(4-hydroxyphenyl)phthalimidine, N-methyl-3,3-bis(4-hydroxyphenyl)phthalimidine, N-ethyl-3,3-bis(4-hydroxyphenyl)phthalimidine, 1,1-bis(4-hydroxyphenyl)cyclohexane, 1,1-bis(3,5-dimethyl-4-hydroxyphenyl)cyclohexane, 1,1-bis(3-methyl-4-hydroxyphenyl)cyclohexane, 1,1-bis(4-hydroxyphenyl)-3,3,5-trimethylcyclohexane, 1,1-bis-(3,5-dimethyl-4-hydroxyphenyl)-3,3,5-trimethyl-cyclohexane, 1,1-bis-(3-methyl-4-hydroxyphenyl)-3,3,5-trimethyl-cyclohexane, and 1,1-bis(4-hydroxyphenyl)-cyclododecane. In the group B, 1,1-bis(4-hydroxyphenyl)-1-phenylethane, 1,1-bis(4-hydroxyphenyl)-3,3,5-trimethylcyclohexane, and 1,1-bis(4-hydroxyphenyl)-cyclododecane are more preferred, and 1,1-bis(4-hydroxyphenyl)-3,3,5-trimethylcyclohexane and 1,1-bis(4-hydroxyphenyl)-cyclododecane are particularly preferred.

From the viewpoint of further facilitating achieving both providing the hollow fiber membrane of the present invention with higher elongation at break, and facilitating further increasing the solubility of the polyarylate resin in the dope solution when the polymer concentration is 19 to 28% by mass in the production of the hollow fiber membrane, it is preferred to use one or more dihydric phenol components selected from the group A and one or more dihydric phenol components selected from the group B in combination, and it is particularly preferred to use 2,2-bis(4-hydroxyphenyl)propane and 1,1-bis(4-hydroxyphenyl)-3,3,5-trimethylcyclohexane or 1,1-bis(4-hydroxyphenyl)-cyclododecane in combination. When one or more dihydric phenol components selected from the group A and one or more dihydric phenol components selected from the group B are used in combination, the molar ratio of one or more dihydric phenol components selected from the group B to one or more dihydric phenol components selected from the group A (one or more dihydric phenol components selected from the group B/one or more dihydric phenol components selected from the group A) is, for example, 0.5 to 5, preferably 1 to 3, and more preferably 1.2 to 1.8.

The aromatic dicarboxylic acid component to be used herein is not limited, and may be any structural unit that is used for known polyarylate resins. Specific examples of the aromatic dicarboxylic acid component include terephthalic acid, isophthalic acid, diphenyl ether-2,2'-dicarboxylic acid, diphenyl ether-2,3'-dicarboxylic acid, diphenyl ether-2,4'-dicarboxylic acid, diphenyl ether-3,3'-dicarboxylic acid, diphenyl ether-3,4'-dicarboxylic acid, diphenyl ether-4,4'-dicarboxylic acid, terephthalic acid, isophthalic acid, orthophthalic acid, 2,6-naphthalenedicarboxylic acid, diphenic acid bis(p-carboxyphenyl) alkane, diphenyl ether-2,2'-dicarboxylic acid, diphenyl ether-2,3'-dicarboxylic acid, diphenyl ether-2,4'-dicarboxylic acid, diphenyl ether-3,3'-dicarboxylic acid, diphenyl ether-3,4'-dicarboxylic acid, and diphenyl ether-4,4'-dicarboxylic acid. Of these, it is preferred to use terephthalic acid and isophthalic acid in combination, because of the high versatility. The aromatic dicarboxylic acid component may contain an aliphatic dicarboxylic acid and an alicyclic dicarboxylic acid, as long as they do not interfere with the effects of the present invention.

The hollow fiber membrane of the present invention may contain a single polyarylate resin or two or more polyarylate resins. The polyarylate resin may or may not be crosslinked as long as it can be formed into a fiber shape. From the viewpoint of cost reduction, the polyarylate resin is preferably not crosslinked.

The hollow fiber membrane of the present invention may contain another resin besides the polyarylate resin. The other resin may be any resin that is soluble in a solvent that dissolves the polyarylate resin used in the formation of the dope solution. Examples of the other resin include polyimides, polyetherimides, polyamide-imides, polyamides, polysulfones, polyethersulfones, polyphenyl ethers, polyvinylidene fluorides, polyvinylpyrrolidones, polyvinyl alcohols, polyacrylic acids, polyalkylene oxides, and polyethylene glycol. Of these, the use of a polyetherimide and/or a polyvinylpyrrolidone as the other resin is preferred, because this facilitates further improving the water vapor separation performance immediately after production.

In the hollow fiber membrane of the present invention, the polyarylate resin content is, for example, 1 to 100% by mass, although not limited thereto; from the viewpoint of further improving the water vapor separation performance after repeated use with compressed air, examples of preferred ranges include 80% by mass or more, 85% by mass or more, 80 to 100% by mass, and 85 to 100% by mass. Alternatively, the hollow fiber membrane of the present invention may consist essentially of (99% by mass or more, even 100% by mass of) the polyarylate resin. Alternatively, the polyarylate resin content may be 5 to 50% by mass, and the content of the resin other than the polyarylate resin may be 50 to 95% by mass.

The hollow fiber membrane of the present invention has a skin layer on at least one of inner and outer surfaces, has a tensile strength of 7 MPa or more, and an elongation at break of 15% or more. In the hollow fiber membrane of the present invention has excellent water vapor separation performance after repeated use with compressed air because the polyarylate resin is used as the hollow fiber membrane, and the skin layer is developed to increase the tensile strength and elongation at break. Moreover, as described below, because the skin layer is developed, the hollow fiber membrane of the present invention has an internal pressure water permeability of less than 100 L/(M$^2$·atm/h) as measured using pure water at 25°C.

The tensile strength of the hollow fiber membrane of the present invention is preferably 8 MPa or more, and more preferably 9.5 MPa or more. The upper limit of the tensile strength is, for example, 50 MPa or less, 30 MPa or less, or 15 MPa or less, although not limited thereto. The elongation at break is preferably 20% or more, more preferably 30% or more, and even more preferably 45% or more. The upper limit of the elongation at break is, for example, 100% or less, 70% or less, or 60% or less, although not limited thereto.

The tensile strength and the elongation at break of the hollow fiber membrane are each herein measured and calculated as follows:

(Tensile strength)

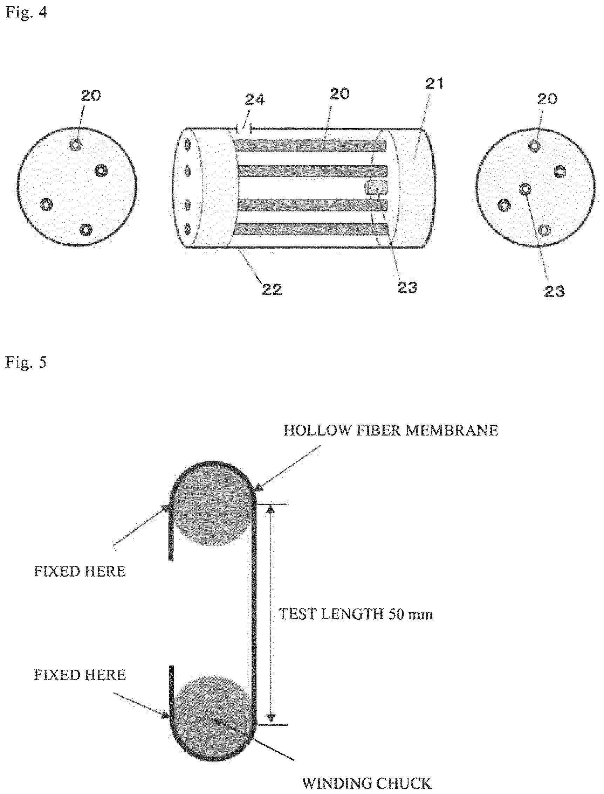

In accordance with JIS L 1013: 2010 8.5.1, the hollow fiber membrane is cut into about 10-cm samples in an environment at a room temperature of 25°C and a humidity of 60%, each hollow fiber membrane sample is wound and mounted on the autograph AGS-100G from Shimadzu, equipped with winding chucks with a diameter of 22 mm, the tensile strength (N) is measured at a test length of 50 mm (the length measurement point of the test length is shown in FIG. 5), a tensile speed of 50 mm/min, and a measurement number of n = 5, and the average value of the five values of tensile strength is determined. Then, a cross section of each of the five hollow fiber membrane samples used for the tensile strength measurement is observed with an optical microscope at 200x magnification, the outer diameter and inner diameter (both at the point of the maximum diameter) of each hollow fiber membrane sample are measured, the cross-sectional area (mm$^2$) of each hollow fiber membrane sample is determined based on the measured outer and inner diameters, and the average value of the cross-sectional areas of the five samples is determined. Then, the average value of tensile strength obtained above is divided by the average value of cross-sectional area obtained above, and the resulting value is determined as the tensile strength (MPa) of the hollow fiber membrane.

(Elongation at break)

The elongation at break of the hollow fiber membrane is herein determined as follows: In accordance with JIS L 1013: 2010 8.5.1, the hollow fiber membrane is cut into about 10-cm samples in an environment at a room temperature of 25°C and a humidity of 60%, each hollow fiber membrane sample is wound and mounted on the autograph AGS-100G from Shimadzu, equipped with winding chucks with a diameter of 22 mm, the elongation at break is measured at a test length of 50 mm, a tensile speed of 50 mm/min, and a measurement number of n = 5, and the average value (%) of the obtained five values of elongation at break is determined as the elongation at break.

The hollow fiber membrane of the present invention, which has a tensile strength of 7 MPa or more and an elongation at break of 15% or more, and also has an internal pressure water permeability of less than 100 L/(m$^2$·atm/h) as measured using pure water at 25°C, can be satisfactorily produced using the below-described method for producing the hollow fiber membrane of the present invention.

The hollow fiber membrane of the present invention has an elastic modulus of preferably 80 to 1200 MPa, more preferably 100 to 800 MPa, and even more preferably 100 to 200 MPa. The elastic modulus is herein determined as follows: In accordance with JIS L 1013: 2010 8.9, method A, the hollow fiber membrane is cut into about 10-cm samples in an environment at a room temperature of 25°C and a humidity of 60%, each hollow fiber membrane sample is wound and mounted on the autograph AGS-100G from Shimadzu, equipped with winding chucks with a diameter of 22 mm, the elastic modulus is measured at a test length of 50 mm, a tensile speed of 50 mm/min, and a measurement number of n = 5, and the average value of these values of elastic modulus is determined as the elastic modulus.

The internal pressure water permeability of the hollow fiber membrane of the present invention as measured using pure water at 25°C is less than 100 L/(m$^2$·atm/h), preferably 0 to 50 L/(m$^2$·atm/h), more preferably 0 to 10 L/(m$^2$·atm/h), and particularly preferably 0 to 1 L/(m$^2$·atm/h). When the internal pressure water permeability is set in these ranges, the hollow fiber membrane of the present invention can have gas barrier properties, can prevent air leakage, and can be suitably used as a water vapor separation membrane.

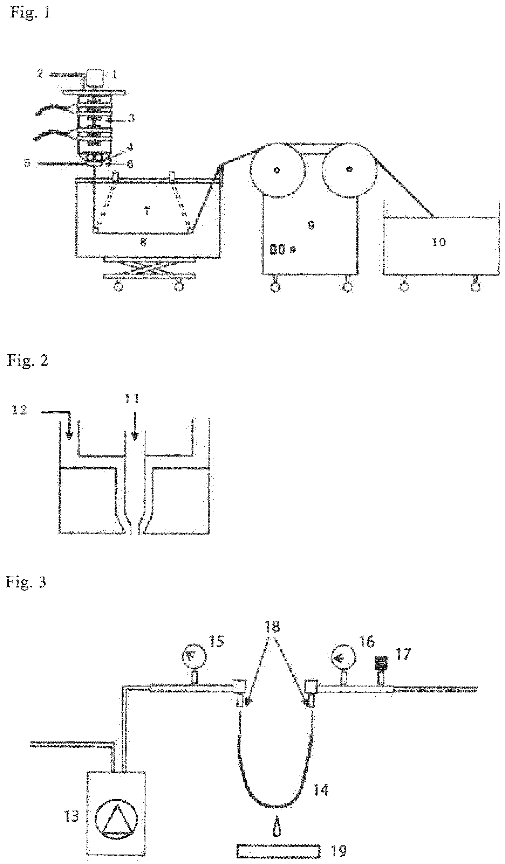

The internal pressure water permeability of the hollow fiber membrane herein corresponds to the value measured using internal pressure filtration with pure water at 25°C. Specifically, the method of measuring the internal pressure water permeability of a hollow fiber membrane is outlined using FIG. 3. As shown in FIG. 3, a hollow fiber membrane 14 is cut to a length of 10 to 20 cm, injection needles 18 with a diameter that corresponds to the inner diameter of the hollow portions at the ends are inserted into these hollow portions, and the hollow fiber membrane 14 is mounted on the apparatus as shown in FIG. 3; thereafter, for a predetermined time (minute), pure water is passed by a feed pump 13 at a pressure of 0.05 MPa for 5 minutes, the volume (L) of water permeated through the membrane and stored in a receiving tray 19 is measured as the amount of permeated water, and the internal pressure water permeability is determined based on the equation shown below. Note that the pressure is the average value of the pressure at an inlet 15 and the pressure at an outlet 16 in FIG. 3.

$$\text{internal pressure water permeability} = \text{amount (L) of permeated water}/[\text{inner diameter (m)} \times 3.14 \times \text{length (m)} \times \{(\text{inlet pressure (atm)} + \text{outlet pressure (atm)})/2\} \times \text{time (h)}]$$

The inner and outer diameters of the hollow fiber membrane of the present invention are not limited, and can be set appropriately according to the purpose of use and the like. The inner diameter is, for example, 100 to 800 $\mu$m, preferably 150 to 600 $\mu$m, and even more preferably 200 to 450 $\mu$m. The outer diameter is, for example, 250 to 1800 $\mu$m, preferably 300 to 1500 $\mu$m, and even more preferably 400 to 1000 $\mu$m. The ratio of the outer diameter to the inner diameter (outer diameter/inner diameter) is, for example, 1.5 to 3.0, preferably 1.6 to 2.5, and more preferably 1.6 to 2.0. The outer diameter and inner diameter are determined by observing the cross section of each of the five hollow fiber membrane samples with an optical microscope at 200x magnification, measuring the outer diameter and inner diameter (both at the point of the maximum diameter) of each hollow fiber membrane sample, and determining the average value of each of the outer diameter and inner diameter.

The thickness of the hollow fiber membrane is not limited, and can be set appropriately according to the purpose of use and the like. The thickness of the hollow fiber membrane is preferably 50 to 500 $\mu$m, more preferably 60 to 300 $\mu$m, and even more preferably 70 to 150 $\mu$m. The thickness of the hollow fiber membrane is calculated based on the outer diameter and inner diameter described above.

The hollow fiber membrane of the present invention includes a skin layer on at least the inner surface or the outer surface, and preferably includes a skin layer on the outer surface. Because the hollow fiber membrane of the present invention includes this skin layer, it has an internal pressure water permeability of less than 100 L/($M^2$·atm/h) as measured using pure water at 25°C.

From the viewpoint of providing the hollow fiber membrane of the present invention with both superior water vapor separation performance immediately after production and superior water vapor separation performance after repeated use with compressed air, the thickness of the skin layer is preferably 100 to 2000 nm, more preferably 200 to 1500 nm, and even more preferably 250 to 1000 nm. As used herein, "skin layer" refers to the region where dense micropores are localized, and substantially no pores are found to be present in a scanning electron microscope (SEM) image at 20000x magnification. The thickness of the skin layer is measured by measuring thicknesses of the skin layer at given five points on a cross section of the hollow fiber membrane using a scanning electron microscope, and determining the average value of these thicknesses as the thickness of the skin layer.

In the hollow fiber membrane of the present invention, the ratio of the thickness of the skin layer to the thickness of the hollow fiber membrane (= thickness of the skin layer/thickness of the hollow fiber membrane $\times$ 100 (%)) is, for example, 0.1 to 5%, preferably 0.1 to 3%, and more preferably 0.1 to 1%. It should be noted that the thickness of the hollow fiber membrane of the present invention can be calculated according to the following formula.

$$\text{the thickness of the hollow fiber membrane} = (\text{outer diameter of the hollow fiber membrane} - \text{inner diameter of the hollow fiber membrane})/2$$

Portions of the hollow fiber membrane other than the skin layer include a region where pores are found to be present in a scanning electron microscope (SEM) image at a magnification of 10000x or less (porous layer). A preferred range of the maximum diameter of the pores present in the region is 0.01 to 100 $\mu$m, for example.

Because the hollow fiber membrane of the present invention is a hollow fiber membrane comprising a polyarylate resin, wherein the hollow fiber membrane has a tensile strength of 7 MPa or more and an elongation at break of 15% or more and has an internal pressure water permeability of less than 100 L/($M^2$·atm/h) as measured using pure water at 25°C, the hollow fiber membrane has excellent water vapor separation performance immediately after production (initial). Preferred water vapor separation performance immediately after production (initial) of the hollow fiber membrane of the present invention is such that, in a hollow fiber membrane module fabricated so that the hollow fiber membrane has an effective inner surface area of $6.8 \times 10^2$ $cm^2$, when air with a dew point of -4°C at 25°C is supplied into the hollow fiber membrane at a pressure of 0.5 MPa and a flow rate of 4.0 L/min, a decrease in the dew point is preferably 3 to 10°C, and more preferably 3 to 7°C.

The decrease in dew point is measured using the hollow fiber membrane module as shown in the schematic diagram in FIG. 4. Specifically, a nylon air tube with an outer diameter of 8 mm and an inner diameter of 6 mm is cut to a length of 200 mm and used as a case 22. The case 22 has a purge air discharge outlet 24. A bundle of hollow fiber membranes 20 is then placed in the case 22, the ends of the hollow fiber membranes are potted 50 mm by pouring a two-component polyurethane adhesive 21 and then cut, resulting in a hollow fiber membrane module with all the hollow portions exposed in the cross sections of the ends. At one end of the module, a silicon tube with a length of 50 mm, an outer diameter of 0.4 mm, and an inner diameter of 0.2 mm is also formed by the potting as a purge air tube 23 for drying the exterior of the membranes. The number of membranes to be included in the module is adjusted so that the membranes have a length of 15 cm and an effective inner surface area of $6.8 \times 10^2$ cm$^2$. Air with a dew point of -4°C at 25°C is supplied into the hollow fiber membranes at a pressure of 0.5 MPa and a flow rate of 4.0 L/min, and the difference between the dew point of the treated air discharged out of the module and the dew point of the air to be treated before being introduced into the hollow fiber membrane module is evaluated as the water vapor separation performance. The dew point of the air is measured using the humidity meter HMP-234 from VAISALA.

Because the hollow fiber membrane of the present invention is a hollow fiber membrane comprising a polyarylate resin, wherein the hollow fiber membrane has a tensile strength of 7 MPa or more and an elongation at break of 15% or more and has an internal pressure water permeability of less than 100 L/(m$^2$·atm/h) as measured using pure water at 25°C, the hollow fiber membrane has excellent water vapor separation performance after repeated use with compressed air. Preferred water vapor separation performance after repeated use with compressed air of the hollow fiber membrane of the present invention is such that the water vapor separation performance after repeated use as evaluated by the following measurement is preferably 2 to 10°C, and more preferably 2 to 6°C.

(Measurement of the water vapor separation performance after repeated use)

A hollow fiber membrane module is fabricated in the same manner as described for the "water vapor separation performance immediately after production (initial)" above, and a solenoid valve is attached to the end of the hollow fiber membrane module including the purge tube, while compressed air is supplied through the other end at 0.9 MPa. The pressure as measured using a pressure gauge from Matsubara Keiki is adjusted to be 0 MPa when the solenoid valve is in the open position, and to be 0.9 MPa when the solenoid valve is in the closed position, and a test to pressurize and depressurize the hollow fiber membranes was performed by opening and closing the solenoid valve in a cycle of 5 seconds. After 48 hours, the presence or absence of breakage of the membranes and a change in the water vapor separation performance before and after the test are evaluated.

The method for producing the hollow fiber membrane of the present invention will be hereinafter described in detail.

Using a nonsolvent-induced phase separation (NIPS) method in which a polymer solution containing a polyarylate resin and a solvent, and an internal liquid are discharged from a double-tube nozzle into a coagulation liquid to form a membrane, the hollow fiber membrane of the present invention can be satisfactorily produced by discharging the polymer solution into the coagulation liquid. More specifically, the hollow fiber membrane of the present invention is produced by carrying out the following first to third steps:

First step: dissolving a polyarylate resin in a solvent to prepare a polymer solution (dope solution).

Second step: with the use of a double-tube nozzle for producing a hollow fiber membrane with a double-tube structure, discharging the polymer solution from an outer tubular nozzle while simultaneously discharging an internal liquid from an inner nozzle to introduce the polymer solution and the internal liquid into a coagulation bath, and taking up the resulting membrane at a certain take-up speed to thereby form a hollow fiber membrane.

Third step: removing the solvent from the hollow fiber membrane formed in the second step.

First step

In the first step, a polyarylate resin is dissolved in a solvent to prepare a polymer solution (dope solution). To dissolve the polyarylate resin in the solvent, the polyarylate resin is dissolved in the solvent under room temperature or heating.

While the solvent to be used herein is not limited as long as it can dissolve the polyarylate resin, the solvent is preferably an aprotic polar solvent, and particularly preferably N-methyl-2-pyrrolidone.

Here, the other resin besides the polyarylate resin that is soluble in the solvent can be blended in any ratio. Examples of the other resin include polyimides, polyetherimides, polyamide-imides, polyamides, polysulfones, polyethersulfones, polyphenyl ethers, polyvinylidene fluorides, polyvinylpyrrolidones, polyvinyl alcohols, polyacrylic acids, polyalkylene oxides, and polyethylene glycol. Of these, the use of a polyetherimide and/or a polyvinylpyrrolidone as the other resin is preferred because this facilitates further improving the water vapor separation performance immediately after production.

The solvent may be blended with a solvent as a third component, which is a poor solvent for the polymer, and mixes with the solvent, in order to reduce macrovoids in the portions other than the skin layer of the hollow fiber membrane to increase the strength. Examples of such poor solvents include water and glycols such as glycerin, propylene glycol, 1,3-butanediol, ethylene glycol, diethylene glycol, triethylene glycol, and polyethylene glycol.

While the temperature for dissolving the polymer in the solvent is not limited as long as it does not interfere with the effects of the present invention, it is 10 to 180°C, preferably 20 to 130°C, and more preferably 40 to 110°C. When the solvent is a good solvent, the polymer can be easily dissolved at a low temperature, whereas when a solvent with slightly low affinity is selected as the solvent, or when the solvent is blended with a poor solvent, it is more efficient to dissolve the polymer at a high temperature in a shorter time.

The concentration of the polyarylate resin alone or the concentration of the polyarylate resin and the other resin dissolved in the solvent (i.e., the concentration of the polymer including the polyarylate in the dope solution) is preferably 19 to 28% by mass, more preferably 20 to 28% by mass, and particularly preferably 20 to 25% by mass. In the method for producing the hollow fiber membrane of the present invention, when the polymer concentration is set in these ranges, and then the below-described second and third steps are carried out, the skin layer of the resulting hollow fiber membrane can be satisfactorily developed to increase the tensile strength and the tensile elongation as described above, and the hollow fiber membrane can satisfactorily exhibit excellent water vapor separation performance (water vapor separation performance immediately after production and water vapor separation performance after repeated use with compressed air). That is, in the dope solution for the hollow fiber membrane, the concentration of the polymer including the polyarylate is preferably 19 to 28% by mass, and the method for producing the hollow fiber membrane of the present invention preferably uses the dope solution.

Second step

In the second step, with the use of a double-tube nozzle for producing a hollow fiber membrane with a double-tube structure, the polymer solution (dope solution) is discharged from an outer tubular nozzle while simultaneously discharging an internal liquid from an inner nozzle to introduce the polymer solution and the internal liquid into a coagulation bath, and the resulting membrane is taken up at a certain take-up speed to thereby form a hollow fiber membrane. The temperature during discharging of the polymer solution from the tubular nozzle into the coagulation liquid to form a membrane is 20 to 150°C, or the temperature of the coagulation liquid is 10 to 100°C.

The double tube nozzle for producing the hollow fiber membrane may be any that does not interfere with the effects of the present invention. The diameter of each of the outer and inner tubular nozzles may be set appropriately according to each of the outer and inner diameters of the hollow fiber membrane.

In the second step, while the internal liquid discharged from the inner nozzle of the double tube nozzle may be any fluid that does not interfere with the effects of the present invention, a liquid is preferred to a gas. While the liquid to be used as the internal liquid is not limited, when, for example, the hollow fiber membrane has a skin layer on the outer surface and a porous layer on the inner surface, and when the pore size of the inner surface is to be increased, a liquid with high affinity for the polyarylate resin may be used. Specific examples of liquids with high affinity for the polyarylate resin include N-methyl-2-pyrrolidone, N,N-dimethylacetamide, N,N-dimethylformamide, dimethyl sulfoxide, γ-butyrolactone, δ-valerolactone, ε-caprolactone, sulfolane, 1,4-dioxane, tetrahydrofuran, chloroform, and methylene chloride. These liquids may be used alone, or the liquids with high affinity may be mixed with the below-described liquids with low affinity to adjust the pore size. Specific examples of liquids with low affinity for the polyarylate resin include water, alcohols such as methanol, ethanol, and isopropanol, glycols such as glycerin, propylene glycol, 1,3-butanediol, ethylene glycol, diethylene glycol, triethylene glycol, and polyethylene glycol, higher fatty acids, and liquid paraffin. When the polymer solution has a high viscosity and excellent spinnability, a method in which a gas such as an inert gas is passed may be used. Alternatively, an inorganic salt such as ammonium chloride, calcium chloride, sodium chloride, potassium chloride, or sodium sulfate, or a polymer such as polyvinylpyrrolidone, polyvinyl alcohol, polyacrylic acid, polyalkylene oxide, or polyethylene glycol dissolved in the above-described solvent may be used. In particular, when the hollow fiber membrane has a skin layer on the outer surface and a porous layer on the inner surface, from the viewpoint of providing the hollow fiber membrane with superior water vapor separation performance, the internal liquid is preferably water alone or a mixture of water and N-methyl-2-pyrrolidone. When the mixture of water and N-methyl-2-pyrrolidone is used as the internal liquid, the ratio of the water is preferably 1 to 10% by mass. It is preferred that 0.1 to 10% by mass of polyvinylpyrrolidone be dissolved in the internal liquid, because this facilitates further improving the water vapor separation performance of the resulting hollow fiber membrane.

On the other hand, when the hollow fiber membrane has a skin layer on the inner surface, the internal liquid may be a liquid with low affinity for the polyarylate resin. Specific examples of such liquids with low affinity are as described above. Alternatively, when the hollow fiber membrane has skin layers on both the outer and inner surfaces, both the internal liquid and the below-described coagulation liquid may be liquids with low affinity for the polyarylate resin.

In the second step, the coagulation liquid may be any that does not interfere with the effects of the present invention. While the coagulation liquid is not limited, when, for example, the hollow fiber membrane has a skin layer on the inner surface, and when the pore size of the outer surface is to be increased, a liquid with high affinity for the polyarylate resin may be used. On the other hand, when the hollow fiber membrane has a skin layer on the outer surface, the coagulation liquid may be a liquid with low affinity for the polyarylate resin.. Specific examples of such liquids with high or low affinity are as described above in the section regarding the internal liquid. When the hollow fiber membrane has a skin layer on the outer surface, the use of water alone is preferred among these coagulation liquids, from the viewpoint of providing the hollow fiber membrane with superior tensile strength.

While the flow rate during discharging of the polymer solution from the outer tubular nozzle of the double tube nozzle for producing the hollow fiber membrane is not limited, it is, for example, 1 to 40 g/min, preferably 2 to 20 g/min, and even more preferably 3 to 10 g/min. While the flow rate of the internal liquid may be set appropriately in consideration of the diameter of the inner nozzle of the double tube nozzle for producing the hollow fiber membrane, the type of the internal liquid to be used, the flow rate of the polymer solution, and the like, it is, for example, 0.1 to 2 times, preferably 0.2 to 1 times, and more preferably 0.3 to 0.7 times the flow rate of the polymer solution.

The take-up speed of the hollow fiber membrane is not limited as long as it does not cause flattening of the membrane due to incomplete solidification. The take-up speed is typically 1 to 200 m/min, preferably 10 to 150 m/min, and more preferably 20 to 100 m/min. To increase the take-up rate, the coagulation bath temperature may be increased, or a solvent with a high solidification rate (such as a poor solvent) may be used as the solvent of the coagulation liquid, which allows a hollow fiber membrane without flattening to be fabricated.

By thus carrying out the second step, the polymer solution (dope solution) discharged from the double tube nozzle for producing the hollow fiber membrane coagulates in the coagulation liquid to form a hollow fiber membrane.

Third step

In the third step, the solvent is removed from the hollow fiber membrane formed in the second step. While the method of removing the solvent from the hollow fiber membrane is not limited, and may be a method in which the solvent is evaporated off by drying with a dryer, it is preferred to use a method in which the hollow fiber membrane is immersed in an extraction solvent to extract and remove the solvent undergoing phase separation inside the hollow fiber membrane. The extraction solvent used for the extraction and removal of the solvent is preferably a solvent that is inexpensive, has a low boiling point, and can be easily separated after the extraction by a difference in boiling point or the like. Examples of the extraction solvent include water, methanol, ethanol, 2-propanol, acetone, diethyl ether, hexane, petroleum ether, and toluene. Preferred among these are water, methanol, ethanol, 2-propanol, and acetone, and more preferred is water. The time for immersing the hollow fiber membrane in the extraction solvent is, for example, 0.2 hour to 2 months, preferably 0.5 hour to 1 month, and more preferably 2 hours to 10 days, although not limited thereto. The extraction solvent may be replaced or stirred to effectively extract and remove residual organic solvent in the hollow fiber membrane.

By thus carrying out the third step, the hollow fiber membrane of the present invention is produced.

While the apparatus used in the method for producing the hollow fiber membrane of the present invention is not limited, it is preferably a general apparatus used for dry-wet spinning as shown in FIG. 1, for example. A process flow for producing the hollow fiber membrane of the present invention is hereinafter outlined using the apparatus shown in FIG. 1 an example.

The apparatus shown in FIG. 1 includes a container 3, a coagulation bath 7 filled with the above-described coagulation liquid, a take-up device 9, and a solvent extraction bath 10. The container 3 stores a dope solution obtained in the first step. The bottom of the container 3 has a metering pump 4 and a spinneret 6. The spinneret 6 has a cross-sectional structure as shown in FIG. 2. More specifically, the spinneret 6 has a centrally located internal fluid outlet hole 11 with a circular cross-sectional shape, and a tubular dope solution outlet hole 12 surrounding and concentric with the internal fluid outlet hole 11. The dope solution is supplied to the dope solution outlet hole 12 from inside the container 3 via the metering pump 4. An internal fluid is supplied to the internal fluid outlet hole 11 through an inlet passage 5 shown in FIG. 1 via another metering pump not shown. The apparatus shown in FIG. 1 also includes a stirring motor 1 mounted on the container 3 and a pressurized gas supply passage 2 leading into the container 3.

With this configuration, as described above, the polyarylate resin is mixed with and dissolved in the organic solvent to form a dope solution, which is stored in the container 3. The dope solution and the internal fluid are metered by the respective metering pumps, and fed into the spinneret 6. The dope solution discharged from the spinneret 6 is introduced into the coagulation bath 7 via an air gap, and solidified. During the replacement of the solvent of the polymer solution with the coagulation liquid in the coagulation bath, non-solvent-induced phase separation occurs, resulting in a hollow fiber membrane 8 with a sea-island structure. The hollow fiber membrane 8 thus produced is taken up onto the take-up device 9, and then fed into the solvent extraction bath 10. In the solvent extraction bath 10, the hollow fiber membrane is immersed in an extraction solvent such as water over a predetermined time to remove the organic solvent as the island component of the sea-island structure and the fluid injected into the hollow portion during the spinning. As a result, a desired hollow fiber membrane is produced. This hollow fiber membrane is removed from the solvent extraction bath 10.

A hollow fiber membrane module for separation of water vapor of the present invention comprises the hollow fiber membrane of the present invention housed in a case.

The hollow fiber membrane module may be any module configured such that a bundle of the hollow fiber membranes of the present invention is housed in the module case, and one or both ends of the hollow fiber membrane bundle are sealed with a potting material and anchored. The hollow fiber membrane module may be any module having an opening connected to a flow passage passing the outer wall side of the hollow fiber membranes and an opening connected to the hollow portions of the hollow fiber membranes, as an inlet for the fluid to be treated or an outlet for the treated fluid.

The hollow fiber membrane module is not limited in shape, and may be a dead-end module or a crossflow module. Specific examples of shapes of the hollow fiber membrane module include a dead-end module produced by packing a hollow fiber membrane bundle bent in a U-shape, and sealing an end of the hollow fiber membrane bundle and then cutting the end to make it open; a dead-end module produced by packing straight a hollow fiber membrane bundle whose hollow opening at one end is closed by heat sealing or the like, and sealing the open end of the hollow fiber membrane bundle and then cutting the end to make it open; a dead-end module produced by packing straight a hollow fiber membrane bundle, and sealing the ends of the hollow fiber membrane bundle and then cutting only one end to make the opening exposed; and a crossflow module produced by packing straight a hollow fiber membrane bundle, sealing the ends of the hollow fiber membrane bundle, cutting the sealed portions at the ends of the hollow fiber membrane bundle, and creating two flow passages on the side surface of the case.

While the packing ratio of the hollow fiber membranes inserted into the module case is not limited, it may be such that, for example, the volume of the hollow fiber membranes including the volume of the hollow portions to the internal volume of the module case is 30 to 90% by volume, preferably 35 to 75% by volume, and more preferably 40 to 65% by volume. When the packing ratio falls in these ranges, it is possible to facilitate the operation of packing the hollow fiber membranes into the module case, and facilitate the flow of the fluid between the hollow fiber membranes, while achieving a sufficient filtration area.

Examples of potting materials used to produce the hollow fiber membrane module include, but are not limited to, polyurethane resins, epoxy resins, polyamides, silicone resins, melamine resins, polyethylenes, polypropylenes, phenolic resins, polyimides, and polyurea resins. Preferred among these potting materials are those with low shrinkage or swelling upon curing, and a hardness that is not excessively high. Preferred examples of potting materials include polyurethane resins, epoxy resins, polyamides, silicone resins, and polyethylenes, and more preferred examples include polyurethane resins, epoxy resins, polyamides, and polyethylenes. These potting materials may be used alone or in combination.

Examples of materials of the module case used for the hollow fiber membrane module include, but are not limited to, iron, steel, copper, stainless steel, aluminum and alloys thereof, polyamides, polyesters, polyethylenes, polypropylenes, polyvinylidene fluorides, polytetrafluoroethylenes, polyvinyl chlorides, polysulfones, polyethersulfones, polycarbonates, polyarylates, and polyphenylene sulfides. Preferred among these are polyamides, polyethylenes, polypropylenes, polytetrafluoroethylenes, polycarbonates, polysulfones, and polyethersulfones, and more preferred are polyamides, polyethylenes, polypropylenes, and polytetrafluoroethylenes.

Examples of applications of the hollow fiber membrane and the hollow fiber membrane module of the present invention include a humidifying unit and an air dryer for separating water vapor.

Examples

The present invention will be hereinafter described in detail with examples and comparative examples; however, the present invention is not limited to the examples.

(Example 1)

In a reaction vessel equipped with a stirrer, 1.2 L of water was placed, 0.79 mol of sodium hydroxide, 0.194 mol of 1,1-bis(4-hydroxyphenyl)-1-phenylethane (BPAP) as a dihydric phenol component, and 0.004 mol of p-tert-butylphenol (PTBP) as a molecular weight regulator were dissolved, and 0.0013 mol of a polymerization catalyst (tributylbenzylammonium chloride) was added and the mixture was stirred vigorously (aqueous alkaline solution). 0.100 mol of terephthalic acid chloride (TPC) and 0.100 mol of isophthalic acid chloride (IPC) were weighed into another vessel, and dissolved in 0.7 L of methylene chloride. This methylene chloride solution was mixed into the previously prepared aqueous alkaline solution after stirring to initiate polymerization. The polymerization reaction temperature was adjusted to be around 20°C. The polymerization was carried out with stirring for 2 hours; thereafter, the stirring was stopped and the reaction mixture was allowed to stand to separate the aqueous phase and the organic phase, only the aqueous phase was extracted from the reaction vessel, and 2 g of acetic acid was added to the remaining organic phase. Then, 1.5 L of water was added thereto and stirred for 30 minutes, the mixture was again allowed to stand to separate the aqueous and organic phases, and the aqueous phase was extracted. This washing with water was repeated until the pH of the aqueous phase after washing with water was around 7. The resulting organic phase was gradually introduced into a hot water bath at 50°C equipped with a homomixer to evaporate the methylene chloride, causing precipitation of a polymer as a powder, which was then removed for dehydration and drying, thus obtaining a polyarylate resin A containing BPAP as a dihydric phenol component, and terephthalic acid and isophthalic acid as aromatic dicarboxylic acid components. The final resin composition of the polyarylate resin A was the same as the charged composition. 200 parts by mass of the polyarylate resin A and 800 parts by mass of N-methyl-2-pyrrolidone (from BASF) were stirred at 70°C for 4 hours to dissolve the polyarylate resin in N-methyl-2-pyrrolidone to prepare a dope solution. Thereafter, the dope solution was fed into the spinneret 6 via the metering pump 4 in the apparatus shown in FIG. 1, and extruded at 2.8 g/min with a gear pump. The spinneret had a tubular dope solution outlet hole with an outer diameter of 1.11 mm and an inner diameter of 0.60 mm. As an internal liquid for spinning hollow fibers, a mixture of 10 parts by mass of water and 90 parts by mass of N-methyl-2-pyrrolidone was passed at a feed rate of 1.2 g/min. The dope solution thus fed was introduced into water via an air gap of 50 mm to phase separate and solidify, and then taken up onto the take-up device at a take-up speed of 20 m/min. The resulting hollow fiber membrane was immersed in water in the solvent extraction bath 10 for 12 hours to extract the solvent, and then subjected to a drying treatment at 50°C for 1 hour in a hot-air dryer to obtain a hollow fiber membrane of Example 1. The evaluation results are shown in Table 1.

(Example 2)

A hollow fiber membrane of Example 2 was obtained as in Example 1, except that a polyarylate resin B was obtained using 1,1-bis(4-hydroxyphenyl)-3,3,5-trimethylcyclohexane (BPTMC) as a dihydric phenol component, and then a dope solution was prepared using the polyarylate resin B. The evaluation results are shown in Table 1.

(Example 3)

A hollow fiber membrane of Example 3 was obtained as in Example 1, except that a polyarylate resin C was obtained using 1,1-bis(4-hydroxyphenyl)-cyclododecane (BPCDE) as a dihydric phenol component, and then a dope solution was prepared using the polyarylate resin C. The evaluation results are shown in Table 1.

(Example 4)

A hollow fiber membrane of Example 4 was obtained as in Example 1, except that a polyarylate resin D was obtained using 0.118 mol of 2,2-bis(4-hydroxyphenyl)-propane (BPA) and 0.078 mol of BPAP as dihydric phenol components, and then a dope solution was prepared using the polyarylate resin D. The evaluation results are shown in Table 1.

(Example 5)

A hollow fiber membrane of Example 5 was obtained as in Example 4, except that a dope solution was prepared by stirring 200 parts by mass of the polyarylate resin D, 20 parts by mass of polyvinylpyrrolidone (from Tokyo Chemical Industry Co., Ltd.), and 780 parts by mass of N-methyl-2-pyrrolidone (from BASF) at 70°C for 4 hours. The evaluation results are shown in Table 1.

(Example 6)

A hollow fiber membrane of Example 6 was obtained as in Example 5, except that an internal liquid prepared by adding 1 part by mass of polyvinylpyrrolidone (from Tokyo Chemical Industry Co., Ltd.) to a mixture of 10 parts by mass of water and 90 parts by mass of N-methyl-2-pyrrolidone was used. The evaluation results are shown in Table 1.

(Example 7)

A hollow fiber membrane of Example 7 was obtained as in Example 1, except that a polyarylate resin E was obtained using 0.118 mol of BPA and 0.078 mol of BPTMC as dihydric phenol components, and then a dope solution was prepared using the polyarylate resin E. The evaluation results are shown in Table 2.

(Example 8)

A hollow fiber membrane of Example 8 was obtained as in Example 7, except that a dope solution was prepared by stirring 200 parts by mass of the polyarylate resin E, 20 parts by mass of polyvinylpyrrolidone (from Tokyo Chemical Industry Co., Ltd.), and 780 parts by mass of N-methyl-2-pyrrolidone (from BASF) at 70°C for 4 hours. The evaluation results are shown in Table 2.

(Example 9)

A hollow fiber membrane of Example 9 was obtained as in Example 8, except that an internal liquid prepared by adding 1 part by mass of polyvinylpyrrolidone (from Tokyo Chemical Industry Co., Ltd.) to a mixture of 10 parts by mass of water and 90 parts by mass of N-methyl-2-pyrrolidone was used. The evaluation results are shown in Table 2.

(Example 10)

A hollow fiber membrane of Example 10 was obtained as in Example 1, except that a polyarylate resin F was obtained using 0.118 mol of BPA and 0.078 mol of BPCDE as dihydric phenol components, and then a dope solution was prepared using the polyarylate resin F. The evaluation results are shown in Table 2.

(Example 11)

A hollow fiber membrane of Example 11 was obtained as in Example 10, except that a dope solution was prepared by stirring 200 parts by mass of the polyarylate resin F, 20 parts by mass of polyvinylpyrrolidone (from Tokyo Chemical Industry Co., Ltd.), and 780 parts by mass of N-methyl-2-pyrrolidone (from BASF) at 70°C for 4 hours. The evaluation results are shown in Table 2.

(Example 12)

A hollow fiber membrane of Example 12 was obtained as in Example 11, except that an internal liquid prepared by adding 1 part by mass of polyvinylpyrrolidone (from Tokyo Chemical Industry Co., Ltd.) to a mixture of 10 parts by mass of water and 90 parts by mass of N-methyl-2-pyrrolidone was used. The evaluation results are shown in Table 2.

(Example 13)

In a reaction vessel equipped with a stirrer, 1.2 L of water was placed, 0.79 mol of sodium hydroxide, 0.194 mol of BPA as a dihydric phenol component, and 0.0116 mol of p-tert-butylphenol (PTBP) as a molecular weight regulator were dissolved, and 0.0013 mol of a polymerization catalyst (tributylbenzylammonium chloride) was added and stirred vigorously (aqueous alkaline solution). 0.100 mol of terephthalic acid chloride (TPC) and 0.100 mol of isophthalic acid chloride (IPC) were weighed into another vessel, and dissolved in 0.7 L of methylene chloride. This methylene chloride solution was mixed into the previously prepared aqueous alkaline solution after stirring to initiate polymerization. The polymerization reaction temperature was adjusted to be around 20°C. The polymerization was carried out with stirring for 2 hours; thereafter, the stirring was stopped and the reaction mixture was allowed to stand to separate the aqueous phase and the organic phase, only the aqueous phase was extracted from the reaction vessel, and 2 g of acetic acid was added to the remaining organic phase. Then, 1.5 L of water was added thereto and stirred for 30 minutes, the mixture was again allowed to stand to separate the aqueous and organic phases, and the aqueous phase was extracted. This washing with water was repeated until the pH of the aqueous phase after washing with water was around 7. The resulting organic phase was gradually introduced into a hot water bath at 50°C equipped with a homomixer to evaporate the methylene chloride, causing precipitation of a polymer as a powder, which was then removed for dehydration and drying, thus obtaining a polyarylate resin G. The final resin composition of the polyarylate resin G was the same as the charged composition. 20 parts by mass of the polyarylate resin G, 210 parts by mass of polyetherimide ("ULTEM1010" from SABIC), 20 parts by mass of polyvinylpyrrolidone (from Tokyo Chemical Industry Co., Ltd.), and 750 parts by mass of N-methyl-2-pyrrolidone (from BASF) were stirred at 70°C for 10 hours to prepare a dope solution. Thereafter, the dope solution was fed into the spinneret 6 via the metering pump 4 in the apparatus shown in FIG. 1, and extruded at 2.8 g/min with a gear pump. The spinneret had a tubular dope solution outlet hole with an outer diameter of 1.11 mm and an inner diameter of 0.60 mm. As an internal liquid for spinning hollow fibers, an internal liquid prepared by adding 1 part by mass of polyvinylpyrrolidone (from Tokyo Chemical Industry Co., Ltd.) to a mixture of 10 parts by mass of water and 90 parts by mass of N-methyl-2-pyrrolidone was passed at a feed rate of 1.2 g/min. The dope solution thus fed was introduced into water via an air gap of 50 mm to phase separate and solidify, and then taken up onto the take-up device at a take-up speed of 20 m/min. The resulting hollow fiber membrane was immersed in water in the solvent extraction bath 10 for 12 hours to extract the solvent, and then subjected to a drying treatment at 50°C for 1 hour in a hot-air dryer to obtain a hollow fiber membrane of Example 13. The evaluation results are shown in Table 2.

(Example 14)

A hollow fiber membrane of Example 14 was obtained as in Example 13, except that a dope solution was prepared by stirring 130 parts by mass of polyetherimide ("ULTEM 1010" from SABIC), 100 parts by mass of the polyarylate resin G, 20 parts by mass of polyvinylpyrrolidone (from Tokyo Chemical Industry Co., Ltd.), and 750 parts by mass of N-methyl-2-pyrrolidone (from BASF) at 70°C for 10 hours. The evaluation results are shown in Table 2.

(Comparative Example 1)

A hollow fiber membrane of Comparative Example 1 was obtained as in Example 12, except that a dope solution was prepared by stirring 250 parts by mass of polyetherimide ("ULTEM 1010" from SABIC) and 750 parts by mass of N-methyl-2-pyrrolidone (from BASF) at 70°C for 10 hours. The evaluation results are shown in Table 3.

(Comparative Example 2)

A hollow fiber membrane of Comparative Example 2 was obtained as in Example 12, except that a dope solution was prepared by stirring 250 parts by mass of polyetherimide ("ULTEM1010" from SABIC), 20 parts by mass of polyvinylpyrrolidone (from Tokyo Chemical Industry Co., Ltd.), and 730 parts by mass of N-methyl-2-pyrrolidone (from BASF) at 70°C for 10 hours. The evaluation results are shown in Table 3.

(Comparative Example 3)

A hollow fiber membrane of Comparative Example 3 was obtained as in Example 12, except that a dope solution was prepared by stirring 200 parts by mass of polyetherimide ("ULTEM1010" from SABIC), 20 parts by mass of polyvinylpyrrolidone (from Tokyo Chemical Industry Co., Ltd.), and 780 parts by mass of N-methyl-2-pyrrolidone (from BASF) at 70°C for 10 hours. The evaluation results are shown in Table 3.

(Comparative Example 4)

A hollow fiber membrane of Comparative Example 4 was obtained as in Example 1, except that a dope solution was prepared by stirring 100 parts by mass of the polyarylate resin G and 900 parts by mass of N-methyl-2-pyrrolidone (from BASF) at 70°C for 4 hours. The evaluation results are shown in Table 3.

(Comparative Example 5)

A dope solution was prepared by stirring 200 parts by mass of the polyarylate resin G and 800 parts by mass of N-methyl-2-pyrrolidone (from BASF) at 70°C for 4 hours. However, the dope solution gelled, and a hollow fiber membrane could not be obtained.

(Comparative Example 6)

A hollow fiber membrane of Comparative Example 6 was obtained as in Example 1, except that a polyarylate resin H was obtained using 9,9-bis(4-hydroxyphenyl)fluorene (BPF) as a dihydric phenol component, and then a dope solution was prepared by stirring 170 parts by mass of the polyarylate resin H and 830 parts by mass of N-methyl-2-pyrrolidone (from BASF) at 70°C for 4 hours. The evaluation results are shown in Table 3.

The physical properties of each hollow fiber membrane were evaluated as follows.

1. Outer diameter and inner diameter of the hollow fiber membrane, and thickness of the hollow fiber membrane

These properties were measured and calculated as described above.

2. Tensile strength, elongation at break, and elastic modulus of the hollow fiber membrane

These properties were measured and calculated as described above.

3. Thickness of the skin layer of the hollow fiber membrane, and the ratio of the thickness of the skin layer to the thickness of the hollow fiber membrane

These properties were measured and calculated as described above. The skin layers of the hollow fiber membranes of Examples 1 to 5 and Comparative Examples 1 to 3 were each formed on the outer surface. Portions other than the skin layer of each of the hollow fiber membranes of Examples 1 to 5 and Comparative Examples 1 to 3 were a region where pores were found to be present in a scanning electron microscope (SEM) image at a magnification of 10000x or less (porous layer). The hollow fiber membrane of Comparative Example 4 did not have a skin layer, and composed only of a region where pores were found to be present in a scanning electron microscope (SEM) image at a magnification of 10000x or less (porous layer).

4. Internal pressure water permeability as measured using pure water at 25°C

This property was measured and calculated as described above.

5. Water vapor separation performance immediately after production (initial)

This property was measured and calculated as described above, using the hollow fiber membrane module as shown in the schematic diagram of FIG. 4. Specifically, a nylon air tube with an outer diameter of 8 mm and an inner diameter of 6 mm was cut to a length of 200 mm and used as a case 22. The case 22 had a purge air discharge outlet 24. A bundle of hollow fiber membranes 20 was then placed in the case 22, the ends of the hollow fiber membranes were potted 50 mm by pouring a two-component polyurethane adhesive 21 and then cut, resulting in a hollow fiber membrane module with all the hollow portions exposed in the cross sections of the ends. At one end of the module, a silicon tube with a length of 50 mm, an outer diameter of 0.4 mm, and an inner diameter of 0.2 mm was also formed by the potting as a purge air tube 23 for drying the exterior of the membranes. The number of membranes to be included in the module was adjusted so that the membranes had a length of 15 cm and an effective inner surface area of $6.8 \times 10^2$ cm$^2$. Air with a dew point of -4°C at 25°C was supplied into the hollow fiber membranes at a pressure of 0.5 MPa and a flow rate of 4.0 L/min, and the difference between the dew point of the treated air discharged out of the module and the dew point of the air to be treated before being introduced into the hollow fiber membrane module was evaluated as the water vapor separation performance immediately after production (initial). The dew point of the air was measured using the humidity meter HMP-234 from VAISALA. The water vapor separation performance immediately after production (initial) was evaluated as acceptable when the value was 3.0°C or more.

6. Water vapor separation performance after repeated use

This property was measured and calculated as described above. Specifically, a hollow fiber membrane module was fabricated in the same manner as described for the "water vapor separation performance immediately after production (initial)", the hollow fiber membranes were subjected to a test in which they were repeatedly pressurized and depressurized from 0 to 0.9 MPa in a cycle of 5 seconds, and the water vapor separation performance after the test was evaluated as the water vapor separation performance after repeated use. The water vapor separation performance after repeated use was evaluated for those without breakage of the membranes. The water vapor separation performance after repeated use was evaluated as acceptable when the value was 2.0°C or more. Performance degradation was evaluated using the index calculated according to the equation shown below. That is, the closer this index is to 100, the smaller the performance degradation.

$$\text{performance degradation index} = \text{water vapor separation performance after}$$

$$\text{the pressure test/water vapor separation performance before the pressure test} \times 100$$

[Table 1]

| | | | Example 1 | Example 2 | Example 3 | Example 4 | Example 5 | Example 6 |
|---|---|---|---|---|---|---|---|---|
| Dope Solution Composition (% by mass) | Polyarylate | A | 20 | 0 | 0 | 0 | 0 | 0 |
| | | B | 0 | 20 | 0 | 0 | 0 | 0 |
| | | C | 0 | 0 | 20 | 0 | 0 | 0 |
| | | D | 0 | 0 | 0 | 20 | 20 | 20 |
| | | E | 0 | 0 | 0 | 0 | 0 | 0 |
| | | F | 0 | 0 | 0 | 0 | 0 | 0 |
| | | G | 0 | 0 | 0 | 0 | 0 | 0 |
| | | H | 0 | 0 | 0 | 0 | 0 | 0 |
| | Polyetherimide | | 0 | 0 | 0 | 0 | 0 | 0 |
| | Polyvinylpyrrolidone | | 0 | 0 | 0 | 0 | 2 | 2 |
| | N-methyl-2-pyrrolidone | | 80 | 80 | 80 | 80 | 78 | 78 |
| | Total | | 100 | 100 | 100 | 100 | 100 | 100 |
| Internal Liquid Composition (part(s) by mass) | N-methyl-2-pyrrolidone | | 90 | 90 | 90 | 90 | 90 | 90 |
| | Polyvinylpyrrolidone | | 0 | 0 | 0 | 0 | 0 | 1 |
| | Water | | 10 | 10 | 10 | 10 | 10 | 10 |
| | Total | | 100 | 100 | 100 | 100 | 100 | 101 |
| Hollow Fiber Membrane Physical Properties | Outer diameter (μm) | | 406 | 392 | 407 | 414 | 396 | 394 |
| | Inner diameter (μm) | | 231 | 230 | 239 | 240 | 238 | 235 |
| | Thickness (μm) of hollow fiber membrane | | 88 | 81 | 84 | 87 | 79 | 80 |
| | Tensile strength (MPa) | | 12.5 | 12.6 | 13.8 | 10.6 | 11.1 | 10.7 |
| | Elongation at break (%) | | 38 | 35 | 31 | 62 | 61 | 60 |
| | Elastic modulus (MPa) | | 183 | 176 | 191 | 115 | 129 | 118 |
| | Thickness (nm) of skin layer | | 735 | 665 | 834 | 556 | 229 | 923 |
| | Ratio (%) of thickness of skin layer to thickness of hollow fiber membrane | | 0.8 | 0.8 | 1.0 | 0.6 | 0.3 | 1.2 |
| | Internal pressure water permeability (m³·atm/h) | | 0 | 0 | 0 | 0 | 0 | 0 |
| | Water vapor separation performance (°C) immediately after production (initial) | | 3.7 | 4.5 | 3.9 | 3.2 | 3.8 | 4.0 |
| | Water vapor separation performance (°C) after repeated use | | 2.8 | 3.1 | 2.9 | 3.0 | 3.5 | 3.7 |
| | Performance degradation index | | 76 | 69 | 74 | 94 | 92 | 93 |

[Table 2]

| | | | Example 7 | Example 8 | Example 9 | Example 10 | Example 11 | Example 12 | Example 13 | Example 14 |
|---|---|---|---|---|---|---|---|---|---|---|
| Dope Solution Composition (% by mass) | Polyarylate | A | 0 | 0 | 0 | 0 | 0 | 0 | 0 | 0 |
| | | B | 0 | 0 | 0 | 0 | 0 | 0 | 0 | 0 |
| | | C | 0 | 0 | 0 | 0 | 0 | 0 | 0 | 0 |
| | | D | 0 | 0 | 0 | 0 | 0 | 0 | 0 | 0 |
| | | E | 20 | 20 | 20 | 0 | 0 | 0 | 0 | 0 |
| | | F | 0 | 0 | 0 | 20 | 20 | 20 | 0 | 0 |
| | | G | 0 | 0 | 0 | 0 | 0 | 0 | 2 | 10 |
| | | H | 0 | 0 | 0 | 0 | 0 | 0 | 0 | 0 |
| | Polyetherimide | | 0 | 0 | 0 | 0 | 0 | 0 | 21 | 13 |
| | Polyvinylpyrrolidone | | 0 | 2 | 2 | 0 | 2 | 2 | 2 | 2 |
| | N-methyl-2-pyrrolidone | | 80 | 78 | 78 | 80 | 78 | 78 | 75 | 75 |
| | Total | | 100 | 100 | 100 | 100 | 100 | 100 | 100 | 100 |
| Internal Liquid Composition (part(s) by mass) | N-methyl-2-pyrrolidone | | 90 | 90 | 90 | 90 | 90 | 90 | 90 | 90 |
| | Polyvinylpyrrolidone | | 0 | 0 | 1 | 0 | 0 | 1 | 1 | 1 |
| | Water | | 10 | 10 | 10 | 10 | 10 | 10 | 10 | 10 |
| | Total | | 100 | 100 | 101 | 100 | 100 | 101 | 101 | 101 |
| Hollow Fiber Membrane Physical Properties | Outer diameter (μm) | | 391 | 418 | 410 | 394 | 409 | 416 | 413 | 412 |
| | Inner diameter (μm) | | 231 | 243 | 230 | 234 | 236 | 242 | 225 | 249 |
| | Thickness (μm) of hollow fiber membrane | | 80 | 88 | 90 | 80 | 87 | 87 | 94 | 82 |
| | Tensile strength (MPa) | | 11.4 | 9.8 | 10.3 | 11.4 | 11.8 | 12.3 | 11.2 | 10.3 |
| | Elongation at break (%) | | 59 | 53 | 51 | 50 | 47 | 47 | 35 | 20 |
| | Elastic modulus (MPa) | | 178 | 119 | 133 | 168 | 155 | 184 | 157 | 120 |
| | Thickness (nm) of skin layer | | 225 | 885 | 814 | 487 | 762 | 923 | 937 | 789 |
| | Ratio (%) of thickness of skin layer to thickness of hollow fiber membrane | | 0.3 | 1.0 | 0.9 | 0.6 | 0.9 | 1.1 | 1.0 | 1.0 |
| | Internal pressure water permeability ($m^2 \cdot atm/h$) | | 0 | 0 | 0 | 0 | 0 | 0 | 0 | 0 |
| | Water vapor separation performance (°C) immediately after production (initial) | | 3.5 | 3.9 | 5.6 | 3.4 | 3.8 | 4.9 | 5.6 | 5.8 |
| | Water vapor separation performance (°C) after repeated use | | 3.3 | 3.7 | 5.3 | 3.1 | 3.6 | 4.6 | 2.3 | 2.7 |
| | Performance degradation index | | 94 | 95 | 95 | 90 | 95 | 93 | 41 | 47 |

[Table 3]

| | | | Comparative Example 1 | Comparative Example 2 | Comparative Example 3 | Comparative Example 4 | Comparative Example 5 | Comparative Example 6 |
|---|---|---|---|---|---|---|---|---|
| Dope Solution Composition (% by mass) | Polyarylate | A | 0 | 0 | 0 | 0 | 0 | 0 |
| | | B | 0 | 0 | 0 | 0 | 0 | 0 |
| | | C | 0 | 0 | 0 | 0 | 0 | 0 |
| | | D | 0 | 0 | 0 | 0 | 0 | 0 |
| | | E | 0 | 0 | 0 | 0 | 0 | 0 |
| | | F | 0 | 0 | 0 | 0 | 0 | 0 |
| | | G | 0 | 0 | 0 | 10 | 20 | 0 |
| | | H | 0 | 0 | 0 | 0 | 0 | 17 |
| | Polyetherimide | | 25 | 25 | 20 | 0 | 0 | 0 |
| | Polyvinylpyrrolidone | | 0 | 2 | 2 | 0 | 0 | 0 |
| | N-methyl-2-pyrrolidone | | 75 | 73 | 78 | 90 | 90 | 83 |
| | Total | | 100 | 100 | 100 | 100 | 100 | 100 |
| Internal Liquid Composition (part(s) by mass) | N-methyl-2-pyrrolidone | | 90 | 90 | 90 | 90 | | 90 |
| | Polyvinylpyrrolidone | | 1 | 1 | 1 | 0 | | 0 |
| | Water | | 10 | 10 | 10 | 10 | | 10 |
| | Total | | 101 | 101 | 101 | 100 | | 100 |
| Hollow Fiber Membrane Physical Properties | Outer diameter (μm) | | 397 | 405 | 412 | 768 | | 405 |
| | Inner diameter (μm) | | 245 | 220 | 239 | 551 | | 233 |
| | Thickness (μm) of hollow fiber membrane | | 76 | 93 | 86 | 109 | | 86 |
| | Tensile strength (MPa) | | 16.8 | 16.7 | 9.6 | 3.4 | | 17.8 |
| | Elongation at break (%) | | 40 | 25 | 35 | 30 | | 5 |
| | Elastic modulus (MPa) | | 238 | 234 | 105 | 47 | Gelled and could not be processed into hollow fibers. | 543 |
| | Thickness (nm) of skin layer | | 830 | 851 | 441 | without skin layer | | 982 |
| | Ratio (%) of thickness of skin layer to thickness of hollow fiber membrane | | 1.1 | 0.9 | 0.5 | - | | 1.1 |
| | Internal pressure water permeability ($m^2 \cdot atm/h$) | | 0 | 0 | 0 | 689 | | 0 |
| | Water vapor separation performance (°C) immediately after production (initial) | | 1.7 | 2.0 | 5.4 | 0 | | 3.0 |
| | Water vapor separation performance (°C) after repeated use | | 0.8 | 1.0 | Membrane breakage, defective | - | | 1.2 |
| | Performance degradation index | | 47 | 50 | - | - | | 41 |

The results shown in Tables 1 to 3 revealed that the hollow fiber membranes of Examples 1 to 14, which are each a hollow fiber membrane comprising a polyarylate resin, wherein the hollow fiber membrane includes a skin layer on the outer surface, has a tensile strength of 7 MPa or more and an elongation at break of 15% or more, and has an internal pressure water permeability of less than 100 L/(M2·atm/h) as measured using pure water at 25°C, are excellent in water vapor separation performance immediately after production and water vapor separation performance after repeated use with compressed air. In particular, the hollow fiber membranes of Examples 4 to 12, in which one or more dihydric phenol components selected from the group A and one or more dihydric phenol components selected from the group B were used in combination, achieved excellent membrane-formability and spinning properties as well as a higher elongation at break, i.e., 45% or more, and were superior in water vapor separation performance after repeated use with compressed air. The hollow fiber membranes of Examples 13 and 14, each containing the polyetherimide in addition to the polyarylate resin, were excellent in water vapor separation performance immediately after production (initial).

In contrast, the hollow fiber membranes of Comparative Examples 1 and 2 had high tensile strengths and elongations at break, but did not contain a polyarylate, and thus, were inferior in water vapor separation performance immediately after production. The hollow fiber membrane of Comparative Example 3, in which the polyetherimide concentration in the dope solution was lower than that in Comparative Example 2, was excellent in water vapor separation performance immediately after production, but did not contain a polyarylate, and thus, was inferior in water vapor separation performance after repeated use with compressed air. The hollow fiber membrane of Comparative Example 4, which did not have a skin layer, did not have water vapor separation performance immediately after production (initial), and thus, had air leakage, and could not be used as a water vapor separation membrane. In Comparative Example 5, the polyarylate concentration was increased to provide a skin layer in the hollow fiber membrane of Comparative Example 4; however, the solubility of the polyarylate resin was poor, and thus, the dope solution gelled, and a hollow fiber membrane could not be obtained. The hollow fiber membrane of Comparative Example 6, which was prepared using a polyarylate containing BPF as a dihydric phenol component, had a significantly low elongation at break, i.e., 5%, and was inferior in water vapor separation performance after repeated use with compressed air.

Reference Signs List

1: stirring motor
2: pressurized gas inlet
3: container
4: metering pump
5: inlet passage (internal liquid inlet)
6: spinneret
7: coagulation bath
8: hollow fiber membrane
9: take-up device
10: solvent extraction bath
11: internal fluid outlet hole
12: dope solution outlet hole
13: feed pump
14: hollow fiber membrane
15: inlet-side pressure gauge
16: outlet-side pressure gauge
17: two-way valve
18: injection needle
19: receiving tray
20: hollow fiber membrane
21: two-component polyurethane adhesive
22: case
23: purge air tube
24: purge air discharge outlet

**Claims**

1. A hollow fiber membrane comprising a polyarylate resin,

   wherein the hollow fiber membrane includes a skin layer on at least one of inner and outer surfaces,
   has a tensile strength of 7 MPa or more and an elongation at break of 15% or more, and
   has an internal pressure water permeability of less than 100 L/(m$^2$·atm/h) as measured using pure water at 25°C.

2. The hollow fiber membrane according to claim 1, further comprising a polyetherimide and/or a polyvinylpyrrolidone.

3. The hollow fiber membrane according to claim 1 or 2, wherein the skin layer has a thickness of 100 to 2000 nm.

4. The hollow fiber membrane according to any one of claims 1 to 3, wherein, in a hollow fiber membrane module fabricated so that the hollow fiber membrane has an effective inner surface area of $6.8 \times 10^2$ cm$^2$, when air with a dew point of -4°C at 25°C is supplied into the hollow fiber membrane at a pressure of 0.5 MPa and a flow rate of 4.0 L/min, a decrease in the dew point is 3 to 10°C.

5. The hollow fiber membrane according to any one of claims 1 to 4, which is used for separating water vapor in air.

6. The hollow fiber membrane according to claim 5, wherein the air is compressed air.

7. A hollow fiber membrane module for separation of water vapor, comprising the hollow fiber membrane according to any one of claims 1 to 6 housed in a case.

8. A humidifying unit comprising the hollow fiber membrane module according to claim 7.

9. An air dryer comprising the hollow fiber membrane module according to claim 7.

10. A dope solution for a hollow fiber membrane, in which the concentration of a polymer including a polyarylate is 19 to 28% by mass, wherein the dope solution is used for forming a hollow fiber membrane.

11. A method for producing the hollow fiber membrane according to any one of claims 1 to 6, comprising using the dope solution according to claim 10.

Fig. 1

Fig. 2

Fig. 3

Fig. 4

Fig. 5

HOLLOW FIBER MEMBRANE

FIXED HERE

TEST LENGTH 50 mm

FIXED HERE

WINDING CHUCK

<div align="center">

**INTERNATIONAL SEARCH REPORT**

</div>

| International application No. |
|---|
| PCT/JP2020/021537 |

**A. CLASSIFICATION OF SUBJECT MATTER**

B01D 63/02(2006.01)i; B01D 69/00(2006.01)i; B01D 69/02(2006.01)i; B01D 69/08(2006.01)i; B01D 71/44(2006.01)i; B01D 71/48(2006.01)i; B01D 71/64(2006.01)i; C08L 39/06(2006.01)i; C08L 67/03(2006.01)i; D01F 6/62(2006.01)i; C08L 79/08(2006.01)i; B01D 53/22(2006.01)i; B01D 53/26(2006.01)i

FI: B01D71/48; B01D71/64; B01D71/44; B01D69/00; B01D69/02; B01D63/02; B01D69/08; B01D53/22; B01D53/26; D01F6/62 306U; C08L67/03; C08L79/08 B; C08L39/06

According to International Patent Classification (IPC) or to both national classification and IPC

**B. FIELDS SEARCHED**

Minimum documentation searched (classification system followed by classification symbols)

B01D63/02; B01D69/00; B01D69/02; B01D69/08; B01D71/44; B01D71/48; B01D71/64; C08L39/06; C08L67/03; D01F6/62; C08L79/08; B01D53/22; B01D53/26

Documentation searched other than minimum documentation to the extent that such documents are included in the fields searched

| | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)

JSTPlus/JMEDPlus/JST7580 (JDreamIII); Japio-GPG/FX

**C. DOCUMENTS CONSIDERED TO BE RELEVANT**

| Category* | Citation of document, with indication, where appropriate, of the relevant passages | Relevant to claim No. |
|---|---|---|
| Y | JP 2016-215102 A (UNITIKA LTD.) 22.12.2016 (2016-12-22) paragraphs [0001]-[0106], fig. 1-4 | 1-3, 5-11 |
| Y | JP 3548354 B2 (NIKKISO CO., LTD.) 28.07.2004 (2004-07-28) paragraphs [0008]-[0070], fig. 1-3 | 1-3, 5-11 |
| Y | JP 201-136276 A (UBE INDUSTRIES, LTD.) 14.07.2011 (2011-07-14) paragraphs [0020], [0049]-[0050] | 5-9 |
| A | WO 201/021300 A1 (TORAY INDUSTRIES, INC.) 24.02.2011 (201-02-24) claims 1-8 | 1-11 |

☐ Further documents are listed in the continuation of Box C. ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 06 July 2020 (06.07.2020) | 28 July 2020 (28.07.2020) |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**

Information on patent family members

| International application No. |
|---|
| PCT/JP2020/021537 |

| Patent Documents referred in the Report | Publication Date | Patent Family | Publication Date |
|---|---|---|---|
| JP 2016-215102 A | 22 Dec. 2016 | (Family: none) | |
| JP 3548354 B2 | 28 Jul. 2004 | JP 10-118472 A paragraphs [0008]-[0070], fig. 1-3 | |
| JP 2011-136276 A | 14 Jul. 2011 | (Family: none) | |
| WO 2011/021300 A1 | 24 Feb. 2011 | US 2012/0174790 A1 claims 1-10 EP 2468389 A1 CA 2764866 A1 CN 102481524 A KR 10-2012-0060828 A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007289944 A
- JP 2004290751 A
- JP H1052631 A
- JP H1176778 A